# FASCICULE DE BREVET EUROPEEN

(11) **EP 1 554 794 B1**
(45) Date de publication et mention de la délivrance du brevet: **08.09.2010**
(21) Numéro de dépôt: 03807870.5
(22) Date de dépôt: 07.10.2003
(51) Int. Cl.: H02K 15/00, B23K 37/04, B08B 15/04

(54) **AGENCEMENT DE SOUDAGE DES EXTREMITES DE PAIRES DE SEGMENTS DE CONDUCTEURS ELECTRIQUES D UN BOBINAGE D UNE MACHINE ELECTR IQUE TOURNANTE**
ANORDNUNG ZUM SCHWEISSEN VON LEITERSEGMENTEN DER WICKLUNG EINER ROTIERENDEN ELEKTRISCHEN MASCHINE
ARRANGEMENT FOR WELDING ENDS OF ELECTRICAL CONDUCTOR SEGMENT PAIRS OF A ROTATING ELECTRICAL MACHINE WINDING

(30) Priorité: 07.10.2002 FR 0212442; 07.10.2002 FR 0212441
(43) Date de publication de la demande: 20.07.2005
(73) Titulaire: VALEO EQUIPEMENTS ELECTRIQUES MOTEUR, 94017 Créteil Cedex (FR)
(72) Inventeur: LENOIR, Romaric, F-62152 Neufchatel-Hardelot (FR); FAVEROLLE, Pierre, F-91230 Montgeron (FR)
(74) Mandataire: Gamonal, Didier
(86) Numéro de dépôt international: PCT/FR2003/002936
(87) Numéro de publication internationale: WO 2004/034552

(56) Documents cités:
- EP-A- 1 041 696
- EP-A- 1 128 527

## Description

### Domaine de l'invention

L'invention concerne un agencement de soudage des extrémités de paires de segments électriquement conducteurs d'un bobinage d'une machine électrique tournante, tel que le bobinage d'un stator, formé par une pluralité de segments conducteurs dont les extrémités sont reliées en série par soudage et qui sont supportés dans un corps de support de façon que les paires d'extrémités de segments conducteurs à souder forment sur un côté axial du corps de support un chignon globalement en forme de couronne, dans lequel les extrémités des paires de segments conducteurs à souder sont juxtaposées dans une direction radiale du corps de support et sont disposées à l'extérieur du corps du support sous la forme de rangées radiales circonférentiellement décalées les unes par rapport aux autres, ledit agencement de soudage comprenant un outillage de bridage desdites extrémités lors du soudage.

### Etat de la technique

Des agencements de ce type sont déjà connus, par exemple par le document EP 1 041 696. Dans celui-ci l'outillage de bridage comporte des moyens de maintien circonférentiel des extrémités des paires de segments conducteurs à souder et des moyens de maintien radial des extrémités à souder de chaque paire de segments conducteurs, ainsi qu'un dispositif de soudage des extrémités de chaque paire de segments conducteurs maintenu circonférentiellement et radialement.

Cet outillage de bridage est conformé pour agir sur deux paires de segment conducteur en forme d'épingles. Chaque paire appartient à une rangée circonférentielle de soudure.

Les moyens de maintien radial comportent un outil interne de constitution complexe et encombrant.

### Objet de l'invention

L'invention a par conséquent pour but de proposer un agencement de soudage dont l'outillage de bridage est d'une complexité et d'un encombrement réduit par rapport à l'état de la technique.

Pour atteindre ce but, l'agencement de soudage selon l'invention est caractérisé en ce les moyens de blocage circonférentiel sont formés par des portions en forme de cames appartenant à des organes de bridage et en ce qu'une portion en forme de came est configurée de façon qu'elle vienne en position serrée entre deux rangées radiales d'extrémités circonférentiellement adjacentes de paires de segments conducteurs à souder, par rotation de l'organe de bridage.

Autrement dit un organe de bridage présente une section transversale en forme d'une came configurée pour assurer le blocage par rotation lorsqu'il est en place entre deux rangées d'extrémités circonférentiellement adjacentes de paires de segments conducteurs à souder.

Grâce à l'invention chaque rangée radiale peut comporter une ou plusieurs paires d'extrémités de segments conducteurs à souder.

Avantageusement l'organe de bridage consiste en une tige.

Selon une caractéristique de l'invention une portion de came présente une section transversale de forme ovale présentant dans la direction de son grand axe une épaisseur sensiblement égale à l'écart entre les deux rangées radiales circonférentiellement adjacentes entre lesquelles elle est susceptible de s'engager, tandis que l'épaisseur dans la direction perpendiculaire du petit axe est inférieure à l'épaisseur.

L'introduction et l'extraction de la portion de came entre deux rangées radiales sont réalisées ainsi de manière simple et rapide.

Le mouvement d'introduction et d'extraction de la portion de came est réalisé par déplacement radial de cette portion, par rapport au corps de support, dans la rainure délimitée par deux rangées radiales circonférentiellement adjacentes, c'est-à-dire circonférentiellement consécutives.

En outre on ménage les segments conducteurs en évitant de blesser ceux-ci.

En variante ce mouvement est réalisé par déplacement axial de la portion de came par rapport au corps pour pénétration ou extraction de la rainure.

Selon encore une autre caractéristique de l'invention la portion de came de blocage circonférentiel comporte au moins deux dents qui font saillie de la surface de came dans la direction de l'épaisseur de blocage circonférentiel et présente un écart assurant lors de la rotation de la came dans sa position de blocage circonférentiel un engagement serré entre les deux dents d'une paire d'extrémités de segments conducteurs à souder.

Selon encore une autre caractéristique de l'invention pour un bobinage comportant dans chaque rangée radiale deux paires d'extrémités de segments conducteurs à souder, avec un intervalle entre les deux paires, la portion en forme de came comporte trois dents espacées les unes des autres de l'écart précité d'engagement serré entre elles d'une paire d'extrémités de segments conducteurs à souder, la dent centrale s'engageant dans l'intervalle formé entre les deux paires d'extrémités.

Selon encore une autre caractéristique de l'invention les faces avant dans la direction de rotation des dents sont chanfreinées en vue de l'engagement des extrémités de segments conducteurs entre les dents.

On réalise ainsi un bon serrage radial des extrémités des segments conducteurs à souder.

Selon encore une autre caractéristique de l'invention les moyens de blocage radial comportent deux organes avantageusement en forme d'anneaux de maintien entre elles, dans la direction radiale, des paires d'extrémités de segments conducteurs à souder.

Les moyens de blocage radial sont ainsi robustes et réduits en nombre.

Selon encore une autre caractéristique de l'invention pour un bobinage à deux paires d'extrémité de segments conducteurs à souder dans une rangée radiale les moyens de bridage radiaux comportent en outre une couronne destinée à s'engager dans l'intervalle formé entre les deux paires d'extrémités des rangées pour assurer le blocage radial en coopération avec les anneaux précités.

Cette couronne est également robuste et permet de diminuer le nombre de pièces.

Selon encore une autre caractéristique de l'invention la partie de la couronne centrale destinée à s'engager dans l'intervalle entre les deux paires d'extrémité à souder de rangées présente un profil tronconique.

Ce profil permet un bon serrage radial des deux paires de segments conducteurs à souder.

On appréciera que, grâce aux dents de la tige ou à la couronne, l'on garantie la distance entre deux paires radialement adjacentes d'extrémités de segments conducteurs à souder.

Selon encore une autre caractéristique de l'invention la portion de came comporte une gorge de centrage destinée à la réception de la partie avant de la portion tronconique de la couronne centrale.

Selon encore une autre caractéristique de l'invention l'agencement comporte un dispositif d'expulsion des scories résultant de l'opération de soudage hors du stator par soufflage de jets d'air en dessous des soudures.

Selon encore une autre caractéristique de l'invention le dispositif de soufflage comporte une bouche d'aspiration des jets d'air chargés des scories expulsés.

Selon encore une autre caractéristique de l'invention le dispositif de soudage est du type à faisceau laser.

### Brève description des dessins

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant deux mode de réalisation de l'invention et dans lesquels :
- la figure 1 est une vue en perspective d'une portion d'un bobinage d'un stator de machine électrique tournante équipé d'un outillage de bridage selon l'invention, montré schématiquement ;
- la figure 2 est une vue simplifiée du détail indiqué par la flèche II sur la figure 1 ;
- la figure 3 montre l'outillage selon la figure 2 dans sa position de maintien circonférentiel et radial de deux rangées de deux paires d'extrémité d'épingles à souder ;
- la figure 4 montre un autre mode de réalisation d'un outillage de bridage selon l'invention, de façon schématique et simplifiée, en une vue en perspective ;
- la figure 5 est une vue en coupe perpendiculaire à son axe d'une tige de blocage circonférentielle de l'outillage de bridage représenté sur la figure 4 ;
- la figure 6 est une vue schématique, à plus grande échelle, du détail montré par la flèche VI de la figure 4 ; et
- la figure 7 est une vue schématique d'un dispositif de soufflage selon l'invention, pour le nettoyage de la zone de soudage des extrémités d'une paire de segments conducteurs d'un bobinage selon les figures 1 ou 4.

### Description d'exemples de réalisation préférentiels de l'invention

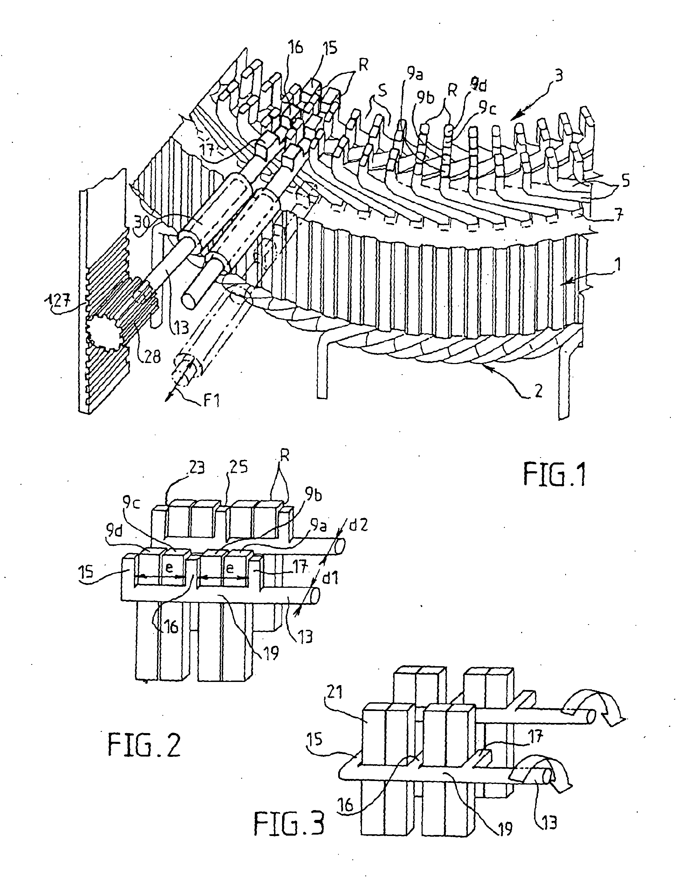

La figure 1 montre un bobinage d'un stator d'une machine électrique tournante, avec son bobinage formé par des segments électriquement conducteurs 5 en forme d'épingle. Les épingles sont globalement en forme de U et présentent donc une tête ici vrillée, constituant le fond du U, et deux branches dont les extrémités libres sont également vrillées. Les références 1, 2 et 3 désignent respectivement le corps du stator, le premier chignon formé par les têtes des segments conducteurs en épingle et le deuxième chignon formé par les extrémités libres des branches des épingles qui sont groupés par paire, les extrémités libres de chaque paire de segments conducteurs devant être reliées en série par soudage. Ce deuxième chignon est en forme de couronne.

Les chignons 2, 3 s'étendent en saillie axiale de part et d'autre du corps 1 du stator, qui est ici de forme annulaire et présente centralement une ouverture en forme de trou cylindrique délimitant la périphérie interne de celui-ci.

Le corps 1 du stator consiste en un paquet de tôles, chaque tôle étant dotée d'une pluralité d'encoches pour montage des segments conducteurs 5.

Les encoches des tôles sont alignées pour formation d'une pluralité d'encoches, qui traversent de part en part le corps 1. Ici les encoches sont alignées pour formation d'une pluralité de rainures axiales 7.

Les encoches sont avantageusement du type semi-fermé et débouchent dans l'ouverture centrale du corps 1. Pour plus de précisions on se reportera par exemple au document EP A 0 961 386.

Ainsi dans une forme de réalisation un isolant est monté dans chaque encoche pour isoler les segments conducteurs 5 du corps 1 du stator.

Ces isolants peuvent comporter chacun une partie de chevauchement éloignée de l'ouverture de l'encoche dans laquelle l'isolant est monté, ladite ouverture débouchant à la périphérie interne du corps du stator globalement de forme tubulaire.

La machine tournante est par exemple un alternateur du type polyphasé pour véhicule automobile comme décrit dans le document EP A 0 961 386 précité.

Dans ce cas l'ouverture centrale du corps 1 sert de logement au rotor de l'alternateur, tel qu'un rotor à griffes ou en variante un rotor à pôles saillants doté le cas échéant d'aimant permanents alternant circonférentiellement avec les pôles saillants. Le corps 1 est alors porté à sa périphérie externe par un support en forme de carter comportant par exemple deux parties appelées palier avant et palier arrière. Ces paliers sont conformés pour porter chacun centralement un roulement à billes pour montage à rotation d'un arbre solidaire du rotor portant à son extrémité avant, côté palier avant, une poulie d'entraînement, destinée à être reliée par au moins une courroie au vilebrequin du moteur du véhicule, et à son extrémité arrière, côté palier arrière, des bagues collectrices.

L'alternateur est par exemple du type triphasé.En variante l'alternateur comporte plus de trois phases.

Cet alternateur est en variante du type réversible et fonctionne également en mode moteur électrique pour démarrer le moteur thermique du véhicule automobile. Un tel alternateur est appelé alterno-démarreur.

Chaque phase comporte, de manière connue, une entrée et une sortie reliées par des segments conducteurs 5. Les sorties et/ou les entrées des phases sont reliées à un dispositif de redressement du courant alternatif produit dans le stator en courant continu, ce dispositif étant le plus souvent porté par le palier arrière.

Les segments conducteurs 5 sont disposés, dans le cas représenté, en groupe de quatre dans les encoches axiales 7 du corps de stator 1 et forment ici, au niveau du deuxième chignon 3, deux rangées circonférentielles d'extrémités radialement alignés, à raison d'une paire d'extrémité par rangée. Ainsi radialement il est formé une rangée de quatre conducteurs. Les conducteurs 5 sont juxtaposés par couche dans la direction radiale à l'intérieur de ces encoches. Les extrémités des paires de segments conducteurs sont juxtaposées dans une direction radiale du corps de support et circonférentiellement décalées les unes par rapport aux autres à l'extérieur du corps 1. Il est ainsi formé à l'extérieur du corps 1, au niveau du chignon 3, des rangées radiales circonférentiellement décalées comprenant au moins une paire de segments conducteurs à souder. A la figure 1 il est donc prévu, par rangée radiale, deux paires d'extrémités de segments conducteurs radialement alignés. Ce nombre dépend des applications. Après soudure il est formé deux rangées annulaires concentriques de soudures.

Ici les conducteurs ont en section une forme rectangulaire dont les longueurs sont parallèles aux bords latéraux des encoches comme visible à la figure 8 du document EP A 0 961 386 précité.

Ces conducteurs appartiennent aux branches d'épingles en forme de U. Les branches des épingles sont montées dans des encoches séparées l'une de l'autre par un pas polaire et occupent des couches différentes dans les encoches concernées.

Les entrées et les sorties des phases sont avantageusement implantées au niveau des têtes des épingles s'étendant en saillie à l'une des extrémités axiale du corps du stator 1 pour former le premier chignon 2. A la figure 1 certaines de ces entrées et sorties (non référencées) sont représentées.

Les branches des épingles traversent le corps 1 à la faveur des encoches 7 pour former en saillie à l'autre extrémité axiale du corps du stator le second chignon 3 en forme de couronne.

Les extrémités libres des épingles sont soudées pour être reliées en série au niveau du second chignon 3 de forme annulaire et s'étendent avantageusement à la même hauteur comme décrit dans le document WO 92/06257.

En se rapportant à ce document ont voit que dans une première étape les têtes des épingles sont vrillées à l'aide d'un premier dispositif de montage. Puis dans une deuxième étape on introduit les branches des épingles dans les encoches 7 du corps 1 du stator et ensuite on effectue un vrillage des extrémités libres des branches à l'aide d'un deuxième dispositif de montage.

Ainsi la figure 1 montre le bobinage après le vrillage des extrémités libres des segments conducteurs qui initialement sont formés par des épingles en forme d'un U. Comme dans le document EP A 0 961 386, dans le chignon 3, quatre extrémités de segments conducteurs sont disposées en une rangée radiale R. Les quatre extrémités désignées par les références 9a à 9d sont groupées radialement en paires 9a, 9b et 9c, 9d. Les extrémités 9a, 9b et 9c, 9d de chaque paire doivent être reliées par soudage. Bien que les épingles 5 soient revêtues d'une couche électriquement isolante en émail, il n'est pas indispensable dénuder les extrémités à lier par soudage car le soudage est ici un soudage du type laser. Plus précisément ici le soudage est piloté de manière séquentielle, le faisceau laser étant interrompu entre deux opérations de soudage. Durant le soudage le faisceau laser est fixe par rapport au corps 1 équipé des extrémités libres des segments conducteurs à souder. Pour plus de précisions on se reportera au document WO 02/069472.

Etant donné que l'opération de soudage nécessite un positionnement précis des conducteurs par rapport à la source énergétique (non représentée), il est connu par le document EP A 1 041 696 précité de prévoir un outillage de bridage qui a pour fonction d'assurer un contact électrique entre les conducteurs à souder et un positionnement radial et angulaire ou circonférentiel précis de ses extrémités à souder. Pour ce faire l'outillage de bridage comporte des moyens de maintien radial et des moyens de blocage circonférentiel des extrémités des segments conducteurs à souder.

L'invention propose un outillage de bridage des extrémités des conducteurs à souder, qui présente une structure très simple et est d'un faible encombrement.

Plus précisément l'outillage de bridage selon l'invention comporte des moyens de blocage circonférentiel qui sont formés, de manière décrite ci-après, par des portions en forme de cames 19 d'une pluralité d'organes de bridage 13, dont deux sont représentés sur les figures.

Un organe de bridage 13 présente la forme d'une tige

Dans un mode de réalisation la tige est configurée de façon à présenter la forme d'une clé comportant au moins deux dents pour brider une paire de segments conducteurs à souder.

Dans le mode de réalisation des figures 1 à 3 la tige comporte une extrémité de bridage des paires de conducteurs qui est configurée de façon à présenter la forme d'une clé comportant trois dents 15, 16, 17, qui sont axialement régulièrement espacées. L'écart axial entre deux dents adjacentes 15, 16 et 16, 17 correspond à la largeur dans la direction radiale des deux extrémités 9a, 9b ou 9c, 9d des deux paires de segments conducteurs, comme on le voit clairement sur la figure 3, tandis que la largeur de la dent centrale 16 correspond à l'intervalle 25 entre les deux paires d'extrémités à souder. Grâce aux trois dents on garanti la distance entre deux paires radialement alignées selon une rangée R d'extrémités libres de segments conducteurs à souder.

Selon une caractéristique de l'invention chaque tige de bridage 13 est déplaçable axialement entre une position neutre représentée en traits mixtes sur la figure 1 dans laquelle la portion de clé de bridage se trouve en dehors de la rainure S délimitée entre deux rangées R, circonférentiellement adjacentes ou consécutives, d'extrémités de segments conducteurs 9a à 9d, et une position à l'intérieur de la rainure S comme cela est montré pour les deux tiges de bridage 13 représentées en traits pleins. Le déplacement des organes de bridage est illustré par la double flèche F. Ce mouvement se fait donc radialement dans la direction de l'axe de la rainure S correspondante.

En variante la position neutre peut également s'obtenir par un déplacement axial des clés par rapport au corps1 pour introduction de celles-ci dans les rainures S. Les tiges, constituant des organes de positionnement, peuvent être amenée à tourner autour de leur axe, d'un angle de 90°, lorsqu'elles occupent leur position finale à l'intérieur de leur rainure S. Les figures 2 et 3 montrent les deux organes de bridage 13 dans leur position avant et après la rotation des tiges. Comme il ressort de ces figures, dans la position tournée de la figure 3, les deux paires d'extrémités 9a, 9b et 9c, 9b de chaque paire sont emprisonnées entre les dents 17 et 16, d'une part, et 16 et 15, d'autre part, la dent 16 étant engagée dans l'intervalle 25 entre les deux paires d'extrémités à souder. Les dents constituent donc des moyens de maintien et de bocage radial des extrémités à souder 9a à 9d.

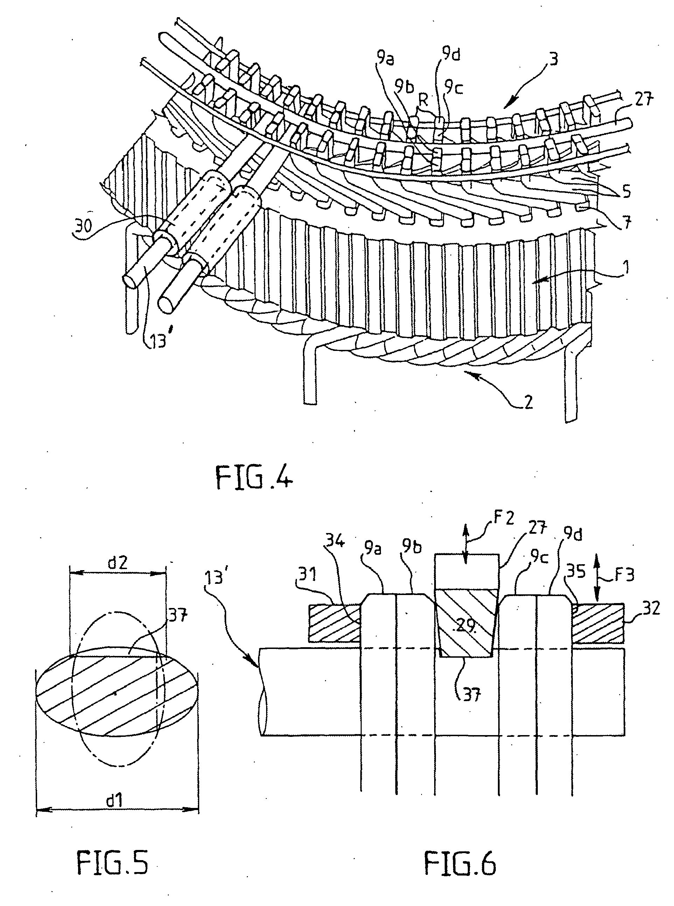

En plus du blocage des paires de conducteurs dans la direction radiale grâce aux dents 15, 16, 17, les organes de bridage 13 permettent également un blocage dans la direction circonférentielle. A cette fin suivant une caractéristique de l'invention, les portions 19 de tiges 13 entre deux dents adjacentes présentent une section transversale en forme d'une came, avantageusement ovale, comme on le voit sur la figure 5. Dans ses portions 19, la tige comporte, dans la direction des dents 15 à 17 une épaisseur d1 qui correspond à l'écart dans la direction circonférentielle de deux rangées adjacentes R d'extrémités de segments conducteurs 9a à 9d, c'est-à-dire à la largeur S de la rainure délimitée entre ses deux rangées. Plus précisément l'épaisseur d1 est choisie de façon que les organes de bridage 13, dans leur position de blocage radiale des paires d'extrémités à souder, représentée sur la figure 3, viennent en contact pressé contre les faces latérales 21 en regard des deux rangées R entre lesquelles ils sont engagés en assurant ainsi également un blocage circonférentiel des paires de conducteurs à souder.

Par contre, les portions en forme de came 19 des organes de bridage 13 présentent, perpendiculairement à l'épaisseur d1, une épaisseur d2 plus faible ce qui permet l'introduction aisée des portions en forme de clé des organes 13 dans les rainures S dans la position représentée sur les figures 1 et 2.

Il est encore à noter que les dents 15 à 17 présentent des chanfreins à leur face avant 23 pour assurer une introduction facile de la portion formant clé des organes de bridage 13 dans l'espace 25 entre les deux paires de conducteurs 9a, 9b et 9c et 9d d'une rangée R.

Concernant le dispositif de déplacement des organes de bridage 13 entre leur position neutre et leur position de blocage, tout dispositif connu peut être utilisé, à condition d'assurer un mouvement radial de va-et-vient de ces organes ou un mouvement axial de va-et-vient de ces organes à l'intérieur des rainures de largeur S et une rotation d'un angle de 90° lorsqu'ils occupent leur position de fin de course axiale entre les extrémités des conducteurs, à l'intérieur du chignon 3. La figure 1 illustre, uniquement à titre d'exemple non limitatif une possibilité de mise en oeuvre du dispositif de commande des organes de bridage. Dans cet exemple, la rotation est assurée par un dispositif du type à crémaillère 127 et pignon 28, ce dernier étant solidaire en rotation de la tige de l'organe de bridage qui sont supportés et guidés axialement dans des paliers 30 qu'il faut imaginer appartenir à une structure de support fixe.

Concernant le fonctionnement de l'outillage de bridage, le blocage à la fois radial et circonférentiel des extrémités de conducteurs à souder se fait par insertion et rotation simultanées des organes de bridage 13.

Les figures 4 à 6 illustrent un deuxième mode de réalisation de l'outillage de bridage selon l'invention. Selon ce mode de réalisation, l'outillage comporte une multitude de tiges 13' que l'on déplace axialement entre une position neutre en dehors du chignon 3 et une position de blocage à l'intérieur du chignon, comme dans le cas du premier mode de réalisation. La partie avant de blocage des tiges présente la forme d'une came, avantageusement ovale, conformément à la figure 5, avec les épaisseurs d1, d2 de la manière et pour les motifs décrits plus haut à propos du premier mode de réalisation. A la différence de ce dernier, la portion de blocage ne comporte pas de dents et n'assure qu'un blocage dans la direction circonférentielle.

Le blocage radial est accompli par des organes de blocage 31, 32 et une couronne centrale indiquée en 27 sur les figures 4 et 6 qui est sensiblement coaxial à l'axe du stator et déplaçable en translation, de la manière représentée par la double flèche F2 sur la figure 6 entre une position au-dessus du chignon (non représenté), et la position représentée, dans laquelle la couronne est engagée dans l'espace 25 entre les deux paires d'extrémités de conducteurs à souder d'une rangée R. A cette fin la portion inférieure 29 de la couronne 27, qui s'engage dans l'espace 25 présente un profil tronconique. Ce profil tronconique assure donc l'effet de blocage radial, de la manière représentée sur la figure 6, en coopération avec deux organes de blocage 31, 32, avantageusement en forme d'anneaux coaxiaux 31, 32 déplaçables en direction des flèches F3 entre une position au-dessus du chignon 3 (non représentée), et une position de blocage radiale dans laquelle les anneaux 31, 32 viennent en appui, l'anneau 31 contre la face latérale radialement extérieure 34 de l'extrémité de conducteur 9a et l'anneau 32 contre la face latérale radialement intérieure 35 de l'extrémité de conducteur 9d de chaque rangée R.

Il est encore à noter, que les parties en forme de cames de blocage des organes de bridage 13' présentent dans sa face périphérique une encoche 37 de centrage de la portion tronconique 29 de la couronne 27 dans sa position de blocage représentée sur la figure 6. L'encoche 37 est par conséquent pratiquée dans la partie de faible courbure, comme on le voit sur la figure 5.

Concernant les moyens de déplacement axial et de rotation des organes de bridage 13', tout dispositif approprié connu en soi peut être utilisé, comme par exemple le principe du type à crémaillère-pignon représenté sur la figure 1 pour les organes de bridage 13. Concernant les déplacements de la couronne de blocage central 27 et des anneaux de blocage latéral 31, 32 puisqu'il s'agit de déplacements simples en translation, il n'est pas nécessaire de décrire spécifiquement les dispositifs de mise en oeuvre de ces déplacements. Il est évident que des moyens classiques peuvent être utilisés à cette fin.

Il est à noter que la forme ovale, par exemple en forme d'ellipse, sans méplat des portions de cames de blocage des organes de bridage s'est avérée très avantageuse puisqu'on évite de blesser les segments conducteurs lors de la rotation de la ou des portions en forme de came.

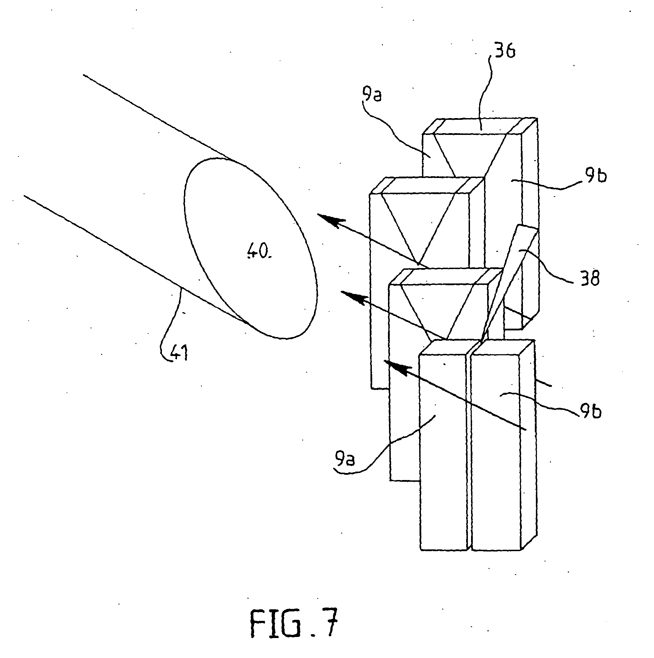

L'invention propose en plus de l'outillage de bridage un dispositif de soufflage des parties situées en dessous des soudures. Ce dispositif expulse les scories résultantes de l'opération de soudage hors du stator et un dispositif d'aspiration permet de récupérer ses scories et éviter ainsi toute pollution de l'environnement. La figure 7 illustre schématiquement un tel dispositif de soufflage.

Cette figure montre les extrémités de trois paires de conducteurs en épingle, après l'opération de soudage, la soudure étant représentée en 36. Une quatrième paire d'épingles est en train d'être soudée par un faisceau laser désigné par la référence 38. La figure illustre sous forme de flèches des jets d'air J qui sont produits par une source de soufflage non représentée et sont orientés de façon à passer en dessous des soudures. Les jets d'air d'expulsion des scories résultant de l'opération de soudage, hors du chignon du stator, sont ensuite aspirés par une bouche d'aspiration 40 d'un tube d'aspiration 41.

L'invention assure ainsi une dissociation des opérations de maintien et de protection du stator pendant l'opération de soudage accomplie à l'aide d'un faisceau laser. Ainsi la protection du stator est assurée par un dispositif indépendant de l'outillage de bridage alors que, selon l'état de la technique, le stator est protégé par le système de bridage qui sert également aux écoulements de chaleur pour limiter ainsi la dégradation de l'émail de revêtement des conducteurs du bobinage.

L'invention permet ainsi le soudage de conducteurs non dénudés, tout en assurant la protection du stator contre des retombées d'émail brûlé.

Bien entendu la présente invention n'est pas limitée aux exemples de réalisation décrits. Ainsi il peut avoir seulement une rangée circonférentielle de soudure à effectuer. Dans ce cas une seule paire de segments conducteurs 5 est montée dans les encoches 7, cette paire présentant au niveau du chignon 3 des extrémités libres 9d, 9c à souder.

Dans ce cas la clé ne présente que deux dents à savoir les dents 15 et 16 ou en variante que l'anneau 32 et la couronne 27.

En variante le nombre de paires de segments conducteurs dans les encoches est supérieur à deux. Dans ce cas il faut augmenter le nombre de dents de la clé ou le nombre de couronnes.

Par exemple pour trois paires d'extrémités à souder il faut prévoir quatre dents.

Bien entendu les encoches du corps 1 peuvent être du type ouvert en étant fermées par des cales d'encoches, ou du type fermé comme décrit dans le document US A 1 826 295. A la lumière de ce document on voit que le corps 1 est en variante le corps d'un rotor. La machine électrique tournante peut donc être en variante une dynamo ou un moteur électrique, tel que le moteur électrique d'un démarreur. En variante la machine électrique appartient à un ralentisseur électromagnétique par exemple du type de celui décrit dans le document EP A 0 331 559, son rotor étant doté d'un bobinage du type de celui de la figure 1.

Ainsi qu'il ressort de la description et des dessins il est prévu une pluralité de tiges 13, 13' pour réduire les usures. En effet on introduit les tiges chacune dans une rainures délimitée par deux rangées radiales circonférentiellement adjacentes et l'on effectue de manière précitée par rotation un bridage. Ensuite on réalise le soudage rangée par rangée à l'aide d'un faisceau laser et ce de manière séquentielle. Les tirs au laser sont réalisés pendant par exemple 0,05 à 0,06 secondes pour souder une rangée. Ensuite on tourne le corps 1 équipé des tiges 13, 13' pour passer à la rangée suivante, le laser étant éteint entre chaque soudage.

On manoeuvre donc les tiges que deux fois (fermeture et ouverture) pour effectuer un soudage de tous les extrémités à souder. En variante on fait appel à une ou plusieurs tiges mais il faut manoeuvrer celles-ci après une ou plusieurs soudures ce qui augmente les usures ainsi que le temps total de soudage.

Bien entendu grâce à l'épaisseur d2 on peut introduire les tiges dans les rainures malgré la variation
radiale, ici faible, de la largeur S.

L'épaisseur d1 peut en variante varier pour tenir compte de cette variation.

Tout autre type de soudage peut être envisagé.

En variante les épingles sont en deux parties soudées au niveau des têtes des épingles comme décrit dans le document EP A 0 961 386 précité.

Dans ce cas un soudage est réalisé également au niveau du premier chignon à l'aide d'un outillage de bridage similaire à celui des figures 1 à 6.

## Revendications

1. Agencement de soudage des extrémités de paires de segments électriquement conducteurs, dits segments conducteurs, d'un bobinage d'une machine électrique tournante formé par une pluralité de segments conducteurs montés en série et supportés par un corps de support (1) de façon que les extrémités de chaque paire de segments conducteurs à souder forment sur un côté axial du corps de support (1) un chignon (3) en forme de couronne, dans lequel les extrémités des paires de segments conducteurs à souder sont juxtaposées dans une direction radiale du corps de support et disposées à l'extérieur du corps (1) du support sous la forme de rangées radiales (R) circonférentiellement décalées les unes par rapport aux autres, ledit agencement de soudage comprenant un outillage de bridage des extrémités des segments conducteurs à souder, qui comporte des moyens de blocage circonférentiel de ces extrémités à souder dans leur position de soudage, **caractérisé en ce que** les moyens de blocage circonférentiel sont formés par des portions en forme de came (19) d'organes de bridage (13, 13') et **en ce qu'**une portion de came (19) est configurée de façon qu'elle vienne en position serrée entre les extrémités des deux rangées radiales (R) circonférentiellement adjacentes de segments conducteur à souder par rotation de l'organe de bridage.

2. Agencement selon la revendication 1, **caractérisé en ce que** les organes de bridage (13, 13') sont mobiles entre une position neutre en dehors du chignon (3) et une position active entre les paires de segments conducteurs (9a, 9b ; 9c, 9d) de deuxdites rangées radiales (R) circonférentiellement adjacentes

3. Agencement selon la revendication 1 ou 2, **caractérisé en ce qu'**une portion de came (19) présente une section transversale de forme ovale présentant dans la direction de son grand axe une épaisseur (d1) sensiblement égale à l'écart entre les deuxdites rangées (R) circonférentiellement adjacentes entre lesquelles elle est susceptible de s'engager, tandis que l'épaisseur dans la direction perpendiculaire du petit axe est inférieure à l'épaisseur (d1)

4. Agencement selon la revendication 3, **caractérisé en ce que** la portion de came de blocage circonférentiel comporte des moyens de blocage radial comportant au moins deux dents (15, 16) qui font saillie de la surface de came dans la direction de l'épaisseur de blocage circonférentiel (d1) et présentent un écart (e) assurant lors de la rotation de la came dans sa position de blocage circonférentiel un engagement serré entre les deux dents (15, 16) d'une paire d'extrémités de segments conducteurs à souder.

5. Agencement selon la revendication 4, pour un bobinage comportant dans chaque rangée radiale deux paires (9a, 9b ; 9c, 9d) d'extrémités de segments à souder, avec un intervalle (25) entre les deux paires, **caractérisé en ce que** la portion en forme de came (19) comporte trois dents (15, 16, 17) espacées les unes des autres de l'écart précité (e) d'engagement serré entre elles d'une paire d'extrémités à souder, la dent centrale (16) s'engageant dans l'intervalle (25) formé entre les deux paires d'extrémités.

6. Agencement selon la revendication 4 ou 5, **caractérisé en ce que** les faces avant dans la direction de rotation des dents (15, 16, 17) sont chanfreinées en vue de l'engagement des extrémités de segments conducteurs entre les dents.

7. Agencement selon l'une quelconque des revendications 1 à 3, **caractérisé en ce que** l'outillage de bridage comporte des moyens de blocage radial comportant deux organes (31, 32) de maintien entre elles, dans la direction radiale, des paires d'extrémités de segments conducteurs à souder.

8. Agencement selon la revendication 7 pour un bobinage à deux paires d'extrémité de segments conducteurs à souder dans une rangée radiale (R), **caractérisé en ce que** les moyens de blocage radial comportent en outre une couronne (27) destinée à s'engager dans l'intervalle (25) formé entre les deux paires d'extrémités (9a, 9b ; 9c, 9d) des rangées (R) pour assurer le blocage radial en coopération avec les organes précités (31, 32) et **en ce que** lesdits organes (31, 32) sont en forme d'anneau.

9. Agencement selon la revendication 8, **caractérisé en ce que** la partie de la couronne centrale (27), destinée à s'engager dans l'intervalle (25) entre les deux paires d'extrémité de segments conducteurs à souder des rangées (R) présente un profil tronconique.

10. Agencement selon l'une des revendications 7 ou 8, **caractérisé en ce que** la couronne centrale présente une portion tronconique et **en ce que** la portion de came (19) comporte une gorge de centrage (37) destinée à la réception de la partie avant de la portion tronconique (29) de la couronne centrale (27).

11. Agencement selon l'une quelconque des revendications 1 à 10, **caractérisé en ce que** un organe de bridage (13) présente la forme d'une tige.

12. Agencement selon l'une quelconque des revendications 1 à 11, **caractérisé en ce qu'**il comporte un dispositif d'expulsion des scories résultant de l'opération de soudage hors du stator par soufflage de jets d'air (J) en dessous des soudures.

13. Agencement selon la revendication 12, **caractérisé en ce que** le dispositif de soufflage comporte une bouche d'aspiration (40) des jets d'air chargés des scories expulsés.

14. Agencement selon l'une quelconque des revendications 1 à 13, **caractérisé en ce que** le dispositif de soudage est du type à faisceau laser.

## Claims

1. Arrangement for welding the ends of pairs of electrically conductive segments, known as conductive segments, of a winding of a rotary electrical machine, which is formed by a plurality of conductive segments which are fitted in series and are supported by a support body (1), such that the ends of each pair of conductive segments to be welded form on an axial side of the support body (1) a chignon (3) in the form of a ring, wherein the ends of the pairs of conductive segments to be welded are juxtaposed in a radial direction of the support body, and are disposed on the exterior of the support body (1) in the form of radial rows (R) which are circumferentially offset relative to one another, the said welding arrangement comprising tooling for flanging of the ends of the conductive segments to be welded, which comprises means for circumferential locking of these ends to be welded in their welding position, **characterised in that** the circumferential locking means are formed by portions in the form of a cam (19) of flanging units (13, 13'), and **in that** a portion of cam (19) is configured such that it is positioned clamped between the ends of the two circumferentially adjacent radial rows (R) of conductive segments to be welded, by rotation of the flanging unit.

2. Arrangement according to claim 1, **characterised in that** the flanging units (13, 13') are movable between a neutral position outside the chignon (3), and an active position between the pairs of conductive segments (9a, 9b; 9c, 9d) of two said circumferentially adjacent radial rows (R).

3. Arrangement according to claim 1 or 2, **characterised in that** a portion of cam (19) has a transverse cross-section with an oval form, which, in the direction of its large axis has a thickness (d1) which is substantially equal to the spacing between the two said circumferentially adjacent rows (R) between which it can be engaged, whereas the thickness in the perpendicular direction of the small axis is less than the thickness (d1).

4. Arrangement according to claim 3, **characterised in that** the portion of circumferential locking cam comprises radial locking means comprising at least two teeth (15, 16) which project from the cam surface in the direction of the thickness of circumferential locking (d1), and have spacing (e) which, during rotation of the cam into its circumferential locking position, assure clamped engagement between the two teeth (15, 16), of a pair of ends of conductive segments to be welded.

5. Arrangement according to claim 4, for a winding comprising in each radial row two pairs (9a, 9b; 9c, 9d) of ends of segments to be welded, with a gap (25) between the two pairs, **characterised in that** the portion in the form of a cam (19) comprises three teeth (15, 16, 17) which are spaced from one another by the aforementioned spacing (e), for clamped engagement between them of a pair of ends to be welded, the central tooth (16) being engaged in the gap (25) formed between the two pairs of ends.

6. Arrangement according to claim 4 or 5, **characterised in that** the front surfaces in the direction of rotation of the teeth (15, 16, 17) are chamfered for the purpose of engagement of the ends of conductive segments between the teeth.

7. Arrangement according to any one of claims 1 to 3, **characterised in that** the flanging tool comprises radial locking means comprising two units (31, 32) for retention between them, in the radial direction, of the pairs of ends of conductive segments to be welded.

8. Arrangement according to claim 7, for a winding with two pairs of ends of conductive segments to be welded in a radial row (R), **characterised in that** the radial locking means additionally comprise a ring (27) which is designed to be engaged in the gap (25) formed between the two pairs of ends (9a, 9b; 9c, 9d) of the rows (R), in order to assure the radial locking in co-operation with the aforementioned units (31, 32), and **in that** the said units (31, 32) are in the form of a hoop.

9. Arrangement according to claim 9, **characterised in that** the part of the central ring (27) which is designed to be engaged in the gap (25) between the two pairs of ends of conductive segments to be welded of the rows (R) have a frusto-conical profile.

10. Arrangement according to one of claims 7 or 8, **characterised in that** the central ring has a frusto-conical portion, and **in that** the cam portion (19) comprises a centring groove (37) which is designed to receive the front part of the frusto-conical portion (29) of the central ring (27).

11. Arrangement according to any one of claims 1 to 10, **characterised in that** a flanging unit (13) has the form of a rod.

12. Arrangement according to any one of claims 1 to 11, **characterised in that** it comprises a device for expulsion from the stator of the dross derived from the welding operation, by blowing jets of air (J) below the welds.

13. Arrangement according to claim 12, **characterised in that** the blowing device comprises a mouth (40) for aspiration of the jets of air which are loaded with the dross expelled.

14. Arrangement according to any one of claims 1 to 13, **characterised in that** the welding device is of the laser beam type.

## Patentansprüche

1. . Anordnung zum Schweißen der Enden von Paaren von elektrisch leitenden Segmenten, Leitersegmente genannt, einer Wicklung einer drehenden elektrischen Maschine, die von mehreren Leitersegmenten geformt wirt, welche in Reihe geschaltet sind und von einem Tragkörper (1) so getragen werden, dass die zu schweißende Enden jedes Paars von Leitersegmenten auf einer axialen Seite des Tragkörpers (1) ein Schaltende (3) in Form eines Kranzes formen, wobei die zu schweißenden Enden der Paare von Leitersegmenten in einer radialen Richtung des Tragkörpers benachbart und außerhalb des Tragkörpers (1) in Form von radialem Reihen (R) angeordnet sand, die in Umfangsrichtung zueinander versetzt wind, wobei die Schweißanordnung ein Werkzeug zum Spannen der zu schweißenden Enden der Leitersegmente enthält das Umfangsblockiereinrichtungen dieser zu schweißenden Enden in ihrer Schweißstellung aufweist, **dadurch gekennzeichnet, dass** die Umfangsblockiereinrichtungen von nockenförmigen Abschnitten (19) von Spannorganen (13, 13') geformt werden, und dass ein Nockenabschnitt (19) so konfiguriert ist, dass er durch Drehen des Spannorgans in eine zwischen den zu schweißenden Enden der zwei in Umfangsrichtung benachbarten radialen Reihen (R) von Leitersegmenten eingespannte Stellung kommt.

2. . Anordnung nach Anspruch 1, **dadurch gekennzeichnet, dass** die Spannorgans (13, 13') zwischen einer neutralen Stellung außerhalb des schaftendes (3) und einer aktiven Stellung zwischen den Paaren von Leitersegmenten (9a, 9b; 9c, 9d) von zwei in Umfangsrichtung benachbarten radialen Reihen (R) beweglich sind.

3. . Anordnung nach Anspruch 1 oder 2, **dadurch gekennzeichnet, dass** ein Nockenabschnitt (19) einen Querschnitt ovalen Form aufweiset, der in Richtung seiner großen Achse eine Dicke (d1) im Wesentlichen gleich Abstand zwischen den zwei in Umtangsrichtung benachbarten Reihen (R) hat, zwischen die er sich einfügen kann, während die Dicke in der lotrechten Richtung der kleinen Achse geringer als die Dicke (d1) ist.

4. . Anordnung nach Anspruch 3, **dadurch gekennzeichnet, dass** der Umfangsblockierungs-Nockenabschnitt radiale Blockiereinrichtungen aufweist, die mindestens zwei Zähne (15, 16) aufweisen, die an der Nockenfläche in Richtung der Dicke der Umfangsblockierung (d1) vorstehen und einen Abstand (e) haben, der bei der Drehung der Nocke in ihre Umfangsblockierstellung einen Klemmeingriff zwischen den zwei Zählen (15, 16) eines Paars von zu schweißenden Enden von Leitersegmenten gewährleistet.

5. . Anordnung nach Anspruch 4 für eine Wicklung, die in jeder radialen Reihe zwei Paare (9a, 9b; 9c, 9d) von zu schweißenden Enden von Segmenten enthält, mit einem Zwischenraum (25) zwischen den zwei Paaren, **dadurch gekenntzeichnet, dass** der nockenförmige Abschnitt (19) drei Zähne (15, 16, 17) aufweist, die um den erwähnten Abstand (e) des Klemmeingriffs eines Paars von zu schweißenden Enden zwischen ihnen zueinander versetzt sand, wobei der zentrale Zahn (16) sich in den zwischen den zwei Paaren von Enden geformten Zwischenraum (25) einfügt.

6. . Anordnung nach Anspruch 4 oder 5, **dadurch gekennzeichnet, dass** die Vorderseiten in der Drehrichtung der Zähne (15, 16, 17) für das Einführen den Enden von Leitersegmenten zwischen die Zähne angeschrägt sind.

7. . Anordnung nach einem der Ansprüche 1 bis 3, **dadurch gekennzeichnet, dass** das Spannwerkzeug radiale Blockiereinrichtungen aufweist, die zwei Organe (31, 32) für den Halt der zu schweißenden Paare von Enden von Leitersegmenten untereinander in radialer Richtung aufweisen.

8. . Anordnung nach Anspruch 7 für eine Wicklung mit zwei zu schweißenden Paaren von Leitersegmentenden in einer radialen Reihe (R), **dadurch gekennzeichnet, dass** die radialen Blockiereinrichtunaen außerdem einen Kranz (27) aufweisen, der dazu bestimmt ist, sich in den zwischen den zwei Paaren von Enden (9a, 9b; 9c, 9d) der Reihen (R) gebildeten Zwischenraum; (25) einzufügen, um die radiale Blockierung in Zusammenwirkung mit den erwähnten Organen (31, 32) zu gewährleistet, und das die Organe (31, 32) die Form eines Rings haben.

9. . Anordnung nach Anspruch 8, **dadurch gekennzeichnet, dass** der Bereich des zentralen Kranzes (27), der dazu bestimmt ist, sich in den Zwischenraum (25) zwischen den zwei Paaren von zu schweißenden Enden von Leitersegmenten der Reihen (R) hinzufügen, sein kegelstumpfförmiges Profil hat.

10. . Anordnung nach einem der Ansprüche 7 oder 8, **dadurch gekennzeichnet, dass** der zentrale Kranz einen kegelstumpfförmigen Anschnitt hat, und dass der Nockenabschnitt (19) eine Zentrierrille (37) aufweiset, die für die Aufnahme des vorderen Bereichs des kegelstumpfförmigen Abschnitts (29) des zentralen Kranzes (27) bestimmt

11. . Anordnung nach einem der Ansprüche 1 bis 10, **dadurch gekennzeichnet, dass** ein Spannorgan (13) die Form einer Stange hat.

12. . Anordnung nach einem der Ansprüche 1 bis 11, **dadurch gekennzeichnet, dass** sie eine Vorrichtung zum Ausstoßen der vom Schweißvorgang stammenden Schlacken aus dem Stator durch Blasen von Luftstrahlen (J) unter den Schweißnähten aufweist.

13. . Anordnung nach Anspruch 12, **dadurch gekennzeichnet, dass** die Blasvorrichtung eine Ansaugöffnung (40) der mit den ausgestoßenen Schlacken beladenen Luftstrahlen aufweist.

14. . Anordnung nach einem der Ansprüche 1 bis 13, **dadurch gekennzeichnet, dass** die Schweißvorrichtung vom Typ mit Laserstrahl ist.
